# EUROPEAN PATENT APPLICATION

(11) **EP 2 075 680 A2**
(43) Date of publication of application: **01.07.2009**
(21) Application number: 08012787.1
(22) Date of filing: 15.07.2008
(51) Int. Cl.: G06F 3/048

(54) **Method for operating software input panel**

(30) Priority: 31.12.2007 TW 96151515
(71) Applicant: HTC Corporation, Taoyuan County 330 (TW)
(72) Inventor: Chen, Ying-Ju, Taoyuan City Taoyuan County 330 (TW)
(74) Representative: Becker Kurig Straus

(57) **Abstract**

A method for operating a software input panel (SIP) is provided for an electronic device (600) having a screen. In the present method, a signal generated corresponding to an operation performed on the electronic device (600) by a user is used for switching types and input modes of the SIP, or for modifying appearances of the SIP. Consequently, a user need not switch the functions of the SIP described above through a SIP menu. As a result, the convenience of operating the SIP can be increased, and the efficiency of using the SIP can also be improved.

## Description

### BACKGROUND OF THE INVENTION

### 1. Field of the Invention

The present invention relates to a method for operating a software input panel. More particularly, the present invention relates to an operation method for swiftly switching various functions of the software input panel.

### 2. Description of Related Art

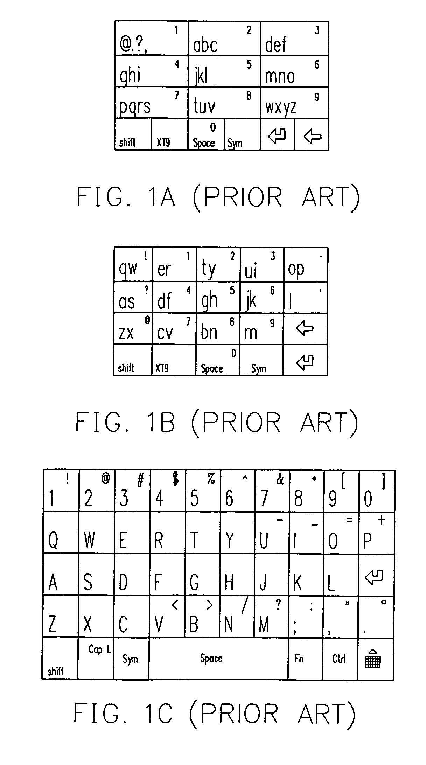

With booming development of a touch sensor technique, more and more electronic devices apply touch screens to function as display screens and input interfaces, so as to substitute combinations of conventional screens and physical keyboards. A software input panel (SIP) is a technique for directly inputting characters and symbols via the touch screen. As to an appearance of the SIP, the SIPs commonly used in handheld electronic devices such as personal digital assistants (PDAs) or PDA phones etc. are generally grouped into 12-key SIPs (shown as FIG. 1A), 20-key SIPs (shown as FIG. 1B) and full QWERTY SIPs (shown as FIG. 1 C) etc.

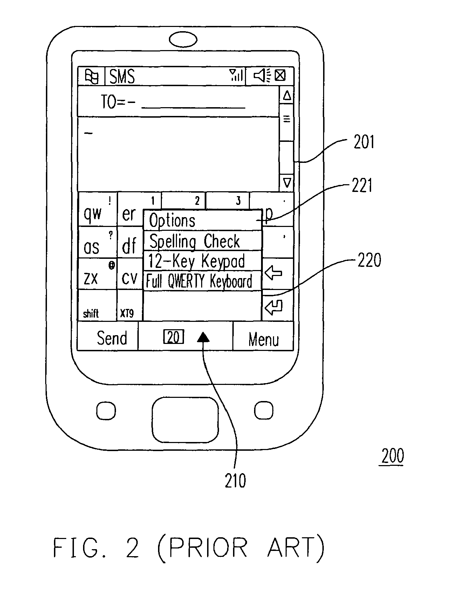

In an electronic device installed with a Microsoft operating system (for example, a handheld electronic device 200 shown in FIG. 2), an indicator icon 210 is displayed on a toolbar below a touch screen 201. When different types of the SIP are required to be switched, the indicator icon 210 is first pressed to start a menu 220, and then the SIP may be switched by selecting different options displayed. However, to cope with a width of the toolbar, size of the indicator icon 210 is relatively small, and therefore it is not easy to swiftly and accurately select the indicator icon 210.

In addition, when related settings of the SIP is about to be modified, the indicator icon 210 is also pressed first to start the menu 220, and then a setting page may be entered only when an item for setting (e.g. option 221) is pressed. Therefore, not only such operation method is time-consuming, but also deployment of the setting page may easily shield an originally displayed application program frame. Moreover, since selection ranges of the indicator icon 210 and the menu 220 are relatively small, relatively more operation time may be wasted due to misoperations thereof, such as pressing of a wrong item etc.

However, if some specific functions of the SIP are designed as hot keys for saving an operation time of the menu, and the hot keys are directly displayed on the SIP, a part of display space of the screen is then occupied. Since size of the screen is limited, setting of excessive hot keys may reduce a display area for the application program frame, and therefore users may probably have a negative utilization sense of the portable electronic device.

### SUMMARY OF THE INVENTION

Accordingly, the present invention is directed to a method for operating a software input panel (SIP), by which various operations may be more conveniently performed to the SIP via a touch screen or a button, so as to improve utilization efficiency thereof.

The present invention provides a method for operating a SIP, which is suitable for an electronic device having a screen, wherein the screen is used for operating and displaying the SIP. The method may be described as follows. First, a signal is received. Next, a corresponding type of the SIP is displayed on the screen according to the signal.

In an embodiment of the present invention, the signal for switching different types of the SIP may be generated by pressing a button.

In an embodiment of the present invention, a touch signal is generated according to a motion track formed corresponding to a sliding operation performed on a touch screen via an input device, and a step of correspondingly switching and displaying the different types of the SIP on the touch screen according to the motion track includes sequentially switching and displaying different types of the SIP according to a direction of the motion track. Wherein, the motion track may be a linear track or a ring-shape track.

According to another aspect, the present invention provides a method for operating a SIP, which is suitable for an electronic device having a screen, wherein the screen is used for operating and displaying the SIP with at least one input mode. The method may be described as follows. First, a signal is received. Next, a corresponding input mode of the SIP is switched according to the signal.

In an embodiment of the present invention, the signal for switching different types of the SIP may be generated by pressing a button.

In an embodiment of the present invention, a touch signal is generated according to a motion track formed corresponding to a sliding operation performed on a touch screen via an input device, and a step of correspondingly switching the input modes of the SIP according to the motion track includes sequentially switching one of the input modes of the SIP according to a direction of the motion track. Wherein, the motion track may be a linear track or a ring-shape track.

According to still another aspect, the present invention provides a method for operating a SIP, which is suitable for an electronic device having a touch screen, wherein the touch screen is used for operating and displaying the SIP. The method may be described as follows. First, a touch signal is received via the touch screen. Next, an initial position and a moving direction of the touch signal are obtained. Finally, an appearance of the SIP is correspondingly modified according to the initial position and the moving direction.

In an embodiment of the present invention, the touch signal is generated corresponding to a sliding operation performed on the touch screen via an input device, and the step of correspondingly modifying the appearance of the SIP according to the initial position and the moving direction includes judging whether or not the initial position is located at a first specific area of the touch screen. If the initial position is located at the first specific area, the SIP is pulled out and displayed along the moving direction from an edge of the touch screen closest to the initial position. Wherein, the first specific area includes an edge area of the touch screen.

In an embodiment of the present invention, the step of correspondingly modifying the appearance of the SIP according to the initial position and the moving direction includes judging whether or not the initial position is located at a second specific area of the touch screen. If the initial position is located at the second specific area, whether or not the moving direction is a first specific direction is then judged. If the moving direction is the first specific direction, the SIP presently displayed on the touch screen is then hidden into an edge of the touch screen along the first specific direction. Wherein, the second specific area includes a keyboard internal area of the presently displayed SIP.

In an embodiment of the present invention, the step of correspondingly modifying the appearance of the SIP according to the initial position and the moving direction includes judging whether or not the initial position is located at a third specific area of the touch screen. If the initial position is located at the third specific area, whether or not the moving direction is a second specific direction is then judged. If the moving direction is the second specific direction, size of the SIP presently displayed on the touch screen is correspondingly reduced along the second specific direction according to a moving distance of the touch signal. However, if the moving direction is a third specific direction, the size of the presently displayed SIP is correspondingly enlarged along the third specific direction according to the moving distance of the touch signal. Wherein, the third specific area includes a keyboard edge area of the SIP displayed on the touch screen.

In the present invention, based on the signal generated by pressing the button or generated corresponding to the sliding operation performed on the touch screen, the types and the input modes of the SIP are correspondingly switched, and the appearances of the SIP are modified. Consequently, various settings of the SIP performed through a SIP menu are unnecessary. As a result, the convenience of operating the SIP can be greatly increased, and the utilization efficiency of the SIP can also be improved.

In order to make the aforementioned and other objects, features and advantages of the present invention comprehensible, a preferred embodiment accompanied with figures is described in detail below.

### BRIEF DESCRIPTION OF THE DRAWINGS

FIG. 1A is a schematic diagram illustrating a 12-key SIP.

FIG. 1B is a schematic diagram illustrating a 20-key SIP.

FIG. 1C is a schematic diagram illustrating a full QWERTY SIP.

FIG. 2 is a schematic diagram illustrating a SIP and a menu thereof of an electronic device.

FIG. 3 is a flowchart illustrating a method for operating a SIP according to an embodiment of the present invention.

FIG. 4 is a flowchart illustrating a method for operating a SIP according to another embodiment of the present invention.

FIG. 5 is a flowchart illustrating a method for operating a SIP according to still another embodiment of the present invention.

FIG. 6 is schematic diagram illustrating an electronic device according to an embodiment of the present invention.

### DESCRIPTION OF EMBODIMENTS

When a user is about to perform settings to functions of a software input panel (SIP) of an electronic device, the user generally has to face an operation difficulty due to limitation of a size of a display screen. Therefore, if a more convenient operating method may be provided for swiftly performing various settings of the SIP, utilization convenience of the SIP then may be improved. Accordingly, the present invention provides a method for operating the SIP based on the aforementioned aspects. To fully convey the spirit of the present invention, embodiments of the present invention are provided below.

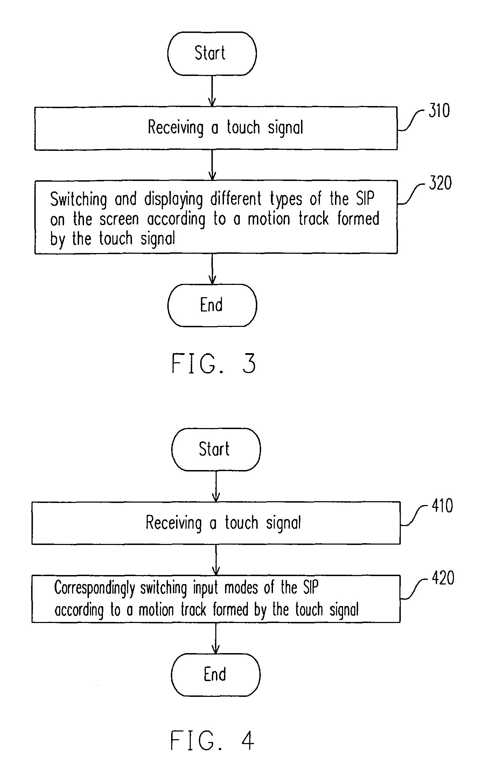

FIG. 3 is a flowchart illustrating a method for operating a SIP according to an embodiment of the present invention. In the present embodiment, an electronic device having a touch screen is taken as an example, wherein the electronic device may be a personal digital assistant (PDA), a PDA phone or a touch phone etc., which is not limited by the present invention. The touch screen equipped to the electronic device may not only be used for receiving operation actions of the user, but may also be used for displaying the SIP.

Referring to FIG. 3, first, in step 310, a touch signal is received by the touch screen. In the present invention, the touch signal may be generated corresponding to a sliding operation performed on the touch screen via an input device such as a finger of the user or a stylus.

Next, in step 320, a corresponding type of the SIP is switched and displayed on the touch screen according to a motion track formed by the touch signal. For example, the SIPs commonly used in the electronic devices are generally grouped into 12-key SIPs (shown as FIG. 1A), 20-key SIPs (shown as FIG. 1B) and full QWERTY SIPs (shown as FIG. 1C) etc. In the step 320, these types of the SIP are sequentially switched and displayed on the touch screen according to a direction of the motion track.

For convenience, the motion track that may be identified by the electronic device is assumed to be a ring-shape track (including a clockwise ring-shape track and an anticlockwise ring-shape track). When the detected motion track is the clockwise ring-shape track, different types of the SIP are then sequentially displayed on the touch screen in a setting sequence of the 12-key SIP, the 20-key SIP and the full QWERTY SIP. When the detected motion track is the anticlockwise ring-shape track, different types of the SIP are then sequentially displayed on the touch screen in a reversed setting sequence of the full QWERTY SIP, the 20-key SIP and the 12-key SIP. It should be noted that though the ring-shape track is used as an example in the present embodiment, the present invention is not limited thereto. In other words, any motion track (for example horizontal linear track or vertical linear track etc.) with direction thereof can be identified may be applied in the present invention.

As described above, when a certain type of the SIP is about to be switched, pressing of an indicator icon 210 shown in FIG. 2 is unnecessary, and only a sliding operation performed on the touch screen via the finger or the stylus is required for generating the touch signal, and then the electronic device may switch the corresponding type of the SIP according to the motion track formed by the touch signal. By such means, switching efficiency of the SIP is greatly improved.

In another embodiment, the signal may be generated by pressing a specific button located on the electronic device. When the electronic device detects such signal, the corresponding type of the SIP is then switched and displayed on the screen of the electronic device according to the signal. Namely, different types of the SIP may be swiftly switched based on pressing of the button.

Besides switching the different types of the SIP, in a following embodiment, how to swiftly switch input modes of the SIP via the touch screen is described in detail. FIG. 4 is a flowchart illustrating a method for operating a SIP according to another embodiment of the present invention. In the present embodiment, a SIP is assumed to be displayed on a touch screen of an electronic device, and the SIP may support a plurality of the input modes.

Referring to FIG. 4, first, in step 410, a touch signal is received by the touch screen of the electronic device. Wherein, the touch signal is generated corresponding to a sliding operation performed on the touch screen via an input device (for example, a finger of the user or a stylus), and the electronic device may be a PDA, a PDA phone or a touch phone etc.

Next, in step 420, the corresponding input mode of the SIP is switched according to the motion track formed by the touch signal. In the present embodiment, the motion track may be a linear track or a ring-shape track having a directionality, which is not limited by the present invention. For convenience, assuming the motion track that may be identified by the electronic device is a horizontal linear track, and assuming the SIP presently displayed on the touch screen is the 12-key SIP which may simultaneously support three input modes of a T9 input mode, a numeral input mode and an English character input mode. In the step 420, when the motion track of the touch signal is a rightward horizontal linear track, the electronic device then sequentially switches the input modes in a setting sequence of the T9 input mode, the numeral input mode and the English character input mode. When the motion track of the touch signal is a leftward horizontal linear track, the electronic device then sequentially switches the input modes in a reverse setting sequence of the English character input mode, the numeral input mode and the T9 input mode. It should be noted that in the present embodiment, the input modes are sequentially switched according to a direction of the motion track. Namely, a mapping relationship between the horizontal linear track and the switching sequence of the input modes are illustrated as an example, which is not limited by the present invention.

In the present embodiment, the touch signal may be generated by sliding the input device on the touch screen, and the electronic device then switches the input modes of the SIP according to the motion track of the touch signal. Consequently, a position of a hot key originally maintained on the SIP for switching the input modes now may be used for other utilizations (for example, may be designed to be a hot key for another function). Meanwhile, switching convenience of the input modes may also be improved according to such operation method.

In addition, in another embodiment, the signal may be generated by pressing a specific button located on the electronic device. When the electronic device detects such signal, the corresponding input mode of the SIP is then switched according to the signal. Therefore, switching of the input modes may be performed by simply pressing the button, and accordingly operation convenience of the SIP is improved.

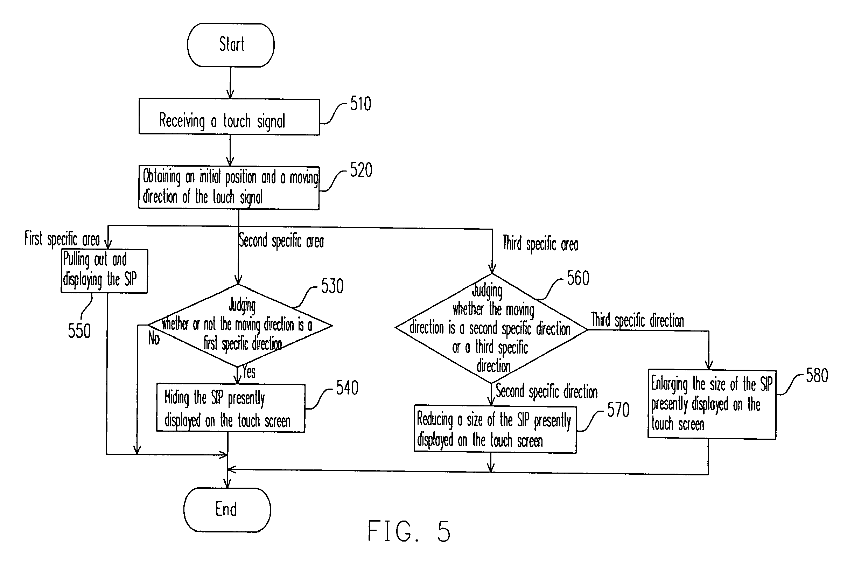

Confined by a limited display area of the touch screen, if size of the SIP is too great and occupies nearly a half to the display area, a region used for displaying an application program frame is then affected. Accordingly, in the following embodiment, another method for operating the SIP is provided, in which the size of the SIP may be adjusted according to an actual requirement. FIG. 5 is a flowchart illustrating a method for operating a SIP according to still another embodiment of the present invention. Referring to FIG. 5, in step 510, a touch signal generated corresponding to an operation performed on the touch screen by a user is received, wherein the operating action of the user may be a sliding operation performed on the touch screen via an input device such as a finger or a stylus.

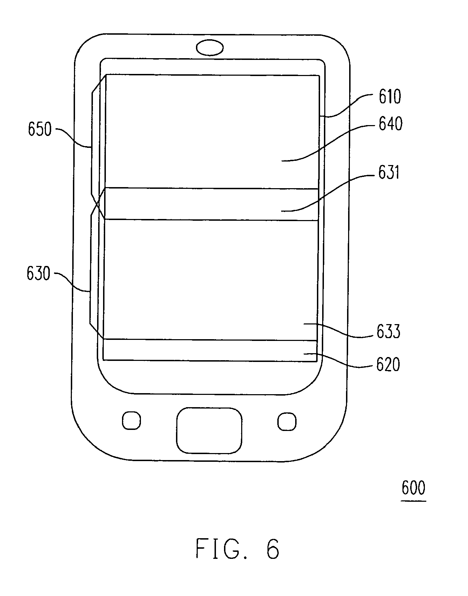

Next, in step 520, an initial position and a moving direction of the touch signal are obtained. Then, the electronic device correspondingly modifies an appearance of the SIP according to the initial position and the moving direction of the touch signal. For convenience, an electronic device 600 of FIG. 6 is taken as an example for illustrating the present invention. A touch screen of the electronic device 600 has a display area 610 including an edge area 620, a SIP display area 630 and an application program display area 640. In the present embodiment, the edge area 620 may be used for displaying a toolbar of an operating system of the electronic device 600. It should be noted that with a different operating system or a different setting, displaying of the toolbar on the screen may be unnecessary, and therefore the present embodiment is not limited for only displaying the toolbar in the edge area 620. The application program display area 640 is used for displaying an operation frame of an application program such as a message or an email. The SIP display area 630 includes a keyboard edge area 631 and a keyboard internal area 633.

When the initial position of the touch signal is located at a second specific area (for example, the keyboard internal area 633), in step 530, whether or not the moving direction of the touch signal is a first specific direction (which is downward in the present embodiment) is then judged. If the moving direction is the first specific direction, in step 540, the SIP presently displayed on the touch screen is then hidden into an edge of the touch screen along the first specific direction. After the SIP is hidden, the application program frame then may be displayed in the whole display area 610 of the touch screen for being viewed by the user.

However, in step 550, when the initial position of the touch signal generated corresponding to the operation performed on the touch screen by the user is located at a first specific area (for example, the edge area 620 in the present embodiment), the electronic device 600 then may automatically pull out the SIP along the moving direction from the edge of the touch screen closest to the initial position, and display the SIP on the touch screen.

It should be noted that in case of a different operating system and setting, if displaying of the toolbar is unnecessary, the edge area 620 may also be used for displaying the SIP. In other words, the edge area 620 becomes a part of the SIP display area 630 under such circumstance. In the present embodiment, when the initial position of the touch signal generated corresponding to the operation performed on the touch screen by the user is located at the edge area 620, the electronic device 600 may also automatically pull out and display the SIP on the touch screen.

In addition, when the initial position of the touch signal is located at a third specific area (for example, the keyboard edge area 631 in the present embodiment) of the touch screen, in step 560, whether the moving direction of the touch signal is the second specific direction (which is downward in the present embodiment) or the third specific direction (which is upward in the present embodiment) is first judged. If the moving direction is the second specific direction, in step 570, size of the presently displayed SIP is correspondingly reduced along the second specific direction according to a moving distance of the touch signal. In an embodiment, the longer the moving distance is, the greater the size of the SIP is reduced. However, if the moving direction is the third specific direction, in step 580, the size of the presently displayed SIP is correspondingly enlarged along the third specific direction according to the moving distance of the touch signal. In an embodiment, the greater the moving distance of the touch signal is, the greater the size of the SIP is enlarged. Conversely, the lesser the moving distance of the touch signal is, the lesser the size of the SIP is enlarged.

In another embodiment, in case of the different operating system and setting, the third specific area may be enlarged to an area 650 (i.e. including the application program display area 640 and the keyboard edge area 631 simultaneously), and the electronic device 600 may also achieve the aforementioned operations according to operations performed on the third specific area by the user.

As described above, when the user operates the electronic device, and utilization of the SIP is unnecessary, the SIP then may be totally hidden by sliding for example, the finger downwards within the keyboard internal area 633. When the SIP is again required to be utilized, the SIP then may be again displayed on the touch screen by sliding the finger upwards from the edge area 620. Moreover, the user may also touch the keyboard edge area 631 with the finger, and may enlarge or reduce the size of the SIP by sliding the finger upwards or downwards. Based on such operation method, shielding of the application program frame by the SIP may be avoided, and operation of the electronic device may be more convenient.

It should be noted that the method for operating the SIP described in the aforementioned embodiments may be applied to any electronic device having the touch screen and requiring utilization of the SIP. In other words, the aforementioned method may be designed to be a computer program, and the computer program may be stored into a readable storage media (for example a CD-ROM or a hard disk) of a computer. After the computer program is loaded into the electronic device, the method for operating the SIP described in the aforementioned embodiments then may be executed by the electronic device.

In summary, the method for operating the SIP of the present invention has at least the following advantages.
1. A more convenient and intuitive operation method is provided, and various types of the SIP may be switched on the touch screen by directly pressing the button or sliding the finger or the stylus on the touch screen, such that switching efficiency of the SIP is improved.
2. The input modes of the SIP may be switched according to the motion track corresponding to the sliding operation, and therefore setting of the hot key on the SIP for switching the input modes is unnecessary. Namely, the position originally maintained for the hot key now may be used for other utilizations, so as to improve a flexibility of the SIP.
3. The appearance of the SIP may be freely modified according to an actual requirement, such that shielding of the application program frame by the SIP is avoided, and therefore operation convenience of the electronic device is improved.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for operating a software input panel (SIP), for an electronic device (600) having a screen displaying a SIP, the method being **characterized by** the steps of:
receiving a signal; and
correspondingly switching and displaying different types of the SIP on the screen according to the signal.

2. The method for operating a SIP as claimed in claim 1, **characterized in that** the signal is generated by pressing a button so as to switch the different types of the SIP.

3. The method for operating a SIP as claimed in claim 1, **characterized in that** the signal is a touch signal generated according to a motion track formed corresponding to a sliding operation performed on a touch screen via an input device, wherein the motion track comprises at least one of a linear track and a ring-shape track.

4. The method for operating a SIP as claimed in claim 3, **characterized in that** the step of correspondingly switching and displaying the different types of the SIP on the screen according to the touch signal corresponding to the motion track comprises:
sequentially switching and displaying different types of the SIP according to a direction of the motion track.

5. A method for operating a SIP, for an electronic device (600) having a screen displaying a SIP has at least one input mode, the method being **characterized by** the steps of:
receiving a signal; and
correspondingly switching one of the input modes of the SIP according to the signal.

6. The method for operating a SIP as claimed in claim 5, **characterized in that** the signal is generated by pressing a button so as to switch one of the input modes.

7. The method for operating a SIP as claimed in claim 5, **characterized in that** the signal is a touch signal generated according to a motion track formed corresponding to a sliding operation performed on a touch screen via an input device, wherein the motion track comprises at least one of a linear track and a ring-shape track.

8. The method for operating a SIP as claimed in claim 7, **characterized in that** the step of correspondingly switching one of the input modes of the SIP according to the touch signal generated corresponding to the motion track comprises:
sequentially switching one of the input modes of the SIP according to a direction of the motion track.

9. A method for operating a SIP, for an electronic device (600) having a touch screen which is suitable for displaying a SIP, the method being **characterized by** the steps of:
receiving a touch signal via the touch screen;
obtaining an initial position and a moving direction of the touch signal; and
correspondingly modifying an appearance of the SIP according to the initial position and the moving direction.

10. The method for operating a SIP as claimed in claim 9, **characterized in that** the touch signal is generated according to a sliding operation performed on the touch screen via an input device used by an user.

11. The method for operating a SIP as claimed in claim 9, **characterized in that** the step of correspondingly modifying the appearance of the SIP according to the initial position and the moving direction comprises:
judging whether or not the initial position is located at a first specific area of the touch screen, wherein the first specific area comprises an edge area (620) of the touch screen; and
pulling out and displaying the SIP along the moving direction from an edge of the touch screen closest to the initial position if the initial position is located at the first specific area.

12. The method for operating a SIP as claimed in claim 9, **characterized in that** the step of correspondingly modifying the appearance of the SIP according to the initial position and the moving direction comprises:
judging whether or not the initial position is located at a second specific area of the touch screen, wherein the second specific area comprises a keyboard internal area (633) of the SIP presently displayed on the touch screen;
judging whether or not the moving direction is a first specific direction if the initial position is located at the second specific area; and
hiding the SIP presently displayed on the touch screen into an edge of the touch screen along the first specific direction if the moving direction is the first specific direction.

13. The method for operating a SIP as claimed in claim 9, **characterized in that** the step of correspondingly modifying the appearance of the SIP according to the initial position and the moving direction comprises:
judging whether or not the initial position is located at a third specific area of the touch screen;
judging whether or not the moving direction is a second specific direction if the initial position is located at the third specific area; and
correspondingly reducing a size of the SIP presently displayed on the touch screen along the second specific direction according to a moving distance of the touch signal if the moving direction is the second specific direction.

14. The method for operating a SIP as claimed in claim 13, **characterized in that** after the step of judging the touch signal being located at the third specific area, the method further comprises:
judging whether or not the moving direction is a third specific direction; and
correspondingly enlarging the size of the SIP presently displayed on the touch screen along the third specific direction according to the moving distance of the touch signal if the moving direction is the third specific direction.

15. The method for operating a SIP as claimed in claim 13, **characterized in that** the third specific area comprises a keyboard edge area (631) of the SIP presently displayed on the touch screen.
